# EUROPÄISCHE PATENTSCHRIFT

(11) **EP 3 315 256 B1**
(45) Veröffentlichungstag und Bekanntmachung des Hinweises auf die Patenterteilung: **08.01.2020**
(21) Anmeldenummer: 17195129.6
(22) Anmeldetag: 06.10.2017
(51) Int. Cl.: B24B 27/00, B23F 23/12

(54) **SCHLEIFARM ZUM SCHLEIFEN INNENPROFILIERTER WERKSTÜCKE MIT EINER SCHLEIFSCHEIBE**
GRINDER ARM FOR GRINDING INTERNALLY PROFILED WORKPIECES WITH A GRINDING WHEEL
BRAS DE MEULAGE PERMETTANT DE MEULER DES PIÈCES AYANT UN PROFILÉ INTÉRIEUR AU MOYEN D'UN DISQUE DE MEULAGE

(30) Priorität: 21.10.2016 DE 102016012915
(43) Veröffentlichungstag der Anmeldung: 02.05.2018
(73) Patentinhaber: Kapp Werkzeugmaschinen GmbH, 96450 Coburg (DE); NILES Werkzeugmaschinen GmbH, 12681 Berlin (DE)
(72) Erfinder: Bluhme, Ronald, 10245 Berlin (DE)
(74) Vertreter: Gosdin, Michael

(56) Entgegenhaltungen:
- EP-B1- 0 416 151
- DE-A1- 3 539 409
- DE-A1- 4 416 059
- DE-A1- 10 329 724
- JP-A- S5 558 919

## Beschreibung

Die Erfindung betrifft einen Schleifarm zum Schleifen innenprofilierter Werkstücke mit einer Schleifscheibe, wobei der Schleifarm einen rohrförmigen Grundkörper mit einer Längsachse aufweist, in dessen einem axialen Endbereich die Schleifscheibe gelagert ist und in dessen anderem axialen Endbereich ein erster Antrieb für die Schleifscheibe angeordnet ist, wobei die Drehbewegung vom ersten Antrieb auf die Schleifscheibe durch ein erstes Übertragungssystem übertragen wird, wobei die Schleifscheibe auf einer vom ersten Übertragungssystem angetriebenen und um eine Drehachse drehbaren Schleifspindel angeordnet ist, wobei die Schleifspindel in einem Trägerkörper gelagert ist, der im Grundkörper um eine Achse drehbar angeordnet ist, die sowohl auf der Längsachse als auch auf der Drehachse senkrecht steht, wobei sich die Drehachse und die Achse schneiden.

Ein solcher Schleifarm offenbart die JP S 55 58919 A**.** Ein Schleifarm ähnlicher Art ist aus der EP 0 416 151 B1 bekannt. Der rohrförmige Arm wird hier an seinem einen axialen Ende über eine Antriebswelle angetrieben, wobei ein Ritzel angetrieben wird, über das ein Zahnriemen läuft. Am anderen axialen Ende des Arms ist eine weitere Welle angeordnet, die gleichermaßen ein Ritzel trägt, über das der Zahnriemen läuft. Über diese Welle wird dann die Schleifspindel angetrieben. Dabei sind Vorkehrungen getroffen, damit die Schleifscheibe auf den gewünschten Schrägungswinkel eingestellt werden kann, was im Falle des Schleifens einer Schrägverzahnung nötig ist.

Andere Lösungen sind in der DE 20 2016 004 284 U1**,** in der DE 10 2011 103 216 A1**,** in der DE 10 2011 118 312 A1**,** in der DE 103 29 724 A1**,** in der DE 44 16 059 A1 und in der DE 35 39 409 A1 offenbart.

Nachteilig ist, dass die Einstellung auf besagten Schrägungswinkel relativ aufwendig und vor allem auf einen beschränkten Winkelbereich beschränkt ist.

Der Erfindung liegt die Aufgabe zugrunde, einen gattungsgemäßen Schleifarm vorzuschlagen, mit dem in besonders einfacher Weise der Schrägungswinkel zum Schleifen von Schrägverzahnungen oder ähnlichen Profilen eingestellt werden kann. Weiterhin liegt ein besonderes Augenmerk der Erfindung darauf, dass keine Beschränkung des Schrägungswinkels vorliegen soll, d. h. es sollen beliebige Winkel einstellbar sein.

Die **Lösung** dieser Aufgabe durch die Erfindung ist dadurch gekennzeichnet, dass der Trägerkörper über ein zweites Übertragungssystem von einem zweiten Antrieb im Grundkörper gedreht werden kann, wobei das zweite Übertragungssystem einen zweiten Riemen, insbesondere einen zweiten Zahnriemen, oder eine zweite Kette umfasst, der oder die (über jeweilige Riemenscheiben bzw. Ritzel) zwischen den beiden axialen Enden des Grundkörpers verläuft.

Damit ist vorteilhaft eine Drehung der Schleifscheibe samt Trägerkörper um die Achse um 360° ermöglicht.

Gemäß einer Fortbildung können Klemmmittel angeordnet sein, mit denen der Trägerkörper im Grundkörper in einer Relativlage geklemmt gehalten werden kann. Als bevorzugte Ausgestaltung der Klemmmittel können Hydrodehnspannmittel vorgesehen werden.

Das erste Übertragungssystem umfasst vorzugsweise einen ersten Riemen, insbesondere einen ersten Zahnriemen, oder eine erste Kette, der oder die (über jeweilige Riemenscheiben bzw. Ritzel) zwischen den beiden axialen Enden des Grundkörpers verläuft. Der erste Riemen oder die erste Kette treibt dabei bevorzugt ein erstes Getriebeelement, insbesondere ein Kronrad, ein Kegelrad oder ein Reibrad, an, das im einen axialen Endbereich des Grundkörpers drehbar gelagert ist, wobei das erste Getriebeelement ein zweites Getriebeelement, insbesondere ein Ritzel, antreibt, das mit der Schleifspindel direkt oder indirekt in Verbindung steht. Das zweite Getriebeelement ist gemäß einer Fortbildung auf einer Zwischenwelle angeordnet, die über ein weiteres Verzahnungspaar die Schleifspindel antreibt.

Dabei ist bevorzugt vorgesehen, dass der zweite Riemen oder die zweite Kette mit dem Trägerkörper verbunden ist und diesen um die Achse drehen kann, wobei die Schleifspindel im Trägerkörper gelagert ist. Die Lagerung des Trägerkörpers im einen axialen Endbereich des Grundkörpers erfolgt bevorzugt mittels zweier Wälzlager.

Als erstes Getriebeelement wird, wie erwähnt, bevorzugt ein Kronrad bzw. ein Kegelrad mit einer konischen Verzahnung eingesetzt, über die das zweite Getriebeelement in Form eines Ritzels angetrieben wird. Möglich allerdings ist an dieser Stelle auch der Einsatz eines Reibradsatzes zur Übertragung der Drehbewegung der angetriebenen Riemenscheibe (direkt oder indirekt) auf die Schleifspindel.

Die Größe der einzelnen Komponenten und insbesondere der Schleifscheibe wird so gewählt, dass die zu schleifende Verzahnung problemlos geschliffen werden kann. Bei Wahl eines kleinen Durchmessers für die Schleifscheibe können gegebenenfalls auch Innenverzahnungen mit geringem Teilkreisdurchmesser geschliffen werden. Somit ist das Schleifen kleiner Kopfkreis-Durchmesser von Innenverzahnungen möglich.

In vorteilhafter Weise ist es mit dem vorgeschlagenen Schleifarm möglich, die Schleifscheibe endlos schwenkbar zu halten, d. h. namentlich über den gesamten Winkelbereich (360°) zu schwenken, so dass hinsichtlich des Schrägungswinkels beliebige Verzahnungen und ähnliche Profile geschliffen werden können.

Eintauchtiefen bis 350 mm können so bei beliebigen Schwenkwinkeln problemlos realisiert werden.

Die Länge des Schleifarms (z. B. 350 mm) kann natürlich an die Gegebenheiten angepasst werden.

Für eine steife Ausgestaltung wird in der Regel ein kurzer Arm bevorzugt werden, für andere Werkstücke wird der Arm auch länger ausgestaltet werden können, wobei jeweils die passende Schleiftechnologie eingesetzt wird.

Je größer der Armquerschnitt ist, desto länger kann auch eine biegesteife Arm-Konstruktion sein. Der Querschnitt des Schleifarms beeinflusst die Biegesteifigkeit und kann bei extremen Längen- und Querschnittsverhältnissen durch eine angepasste Technologie positiv beeinflusst werden.

Die mitgeführte Schleifölzuführung ist gleichermaßen endlos drehbar (also über 360°), so dass die Versorgung mit Schmierstoff optimal möglich ist.

Vorteilhafter Weise kann auch ein Mess-System in den Schleifarm integriert werden, das gleichermaßen über den gesamten Umfangsbereich (360°) mitgeführt wird.

Es können sowohl abrichtbare Schleifscheiben als auch solche mit Stahlgrundkörper verwendet werden, der mit Abrasivmaterial belegt ist. Zwecks präziser Spannung der Schleifscheibe auf der Schleifspindel wird bevorzugt eine Hydrospannwelle eingesetzt. Ein schneller und sicherer Schleifscheibenwechsel kann durch einen Frontplattenwechsel oder durch ein schnelles Demontieren und Montieren der Dehnspannwelle erfolgen.

Hohe Werkstücke können problemlos in einer Aufspannung geschliffen werden. Möglich ist auch das Schleifen von Cluster-Aufspannungen.

Das vorgeschlagene Konzept kann auch modular aufgebaut werden, indem austauschbare Halteplatten (Frontplatten) zum Einsatz kommen, um variable Bereiche der Schleifscheibengrößen zu realisieren.

Somit können mit dem vorgeschlagenen Schleifarm Innen- und AußenVerzahnungen mit beliebigen Schrägungswinkeln geschliffen werden.

Gleichermaßen können (innen und außen) Nuten und Gewinde geschliffen werden, gleichermaßen (innen und außen liegende) Lagersitze mit Anlageschultern, Planflächen und mit Sonderprofilen sowie auch Freiformflächen.

Die bislang gegebene Einschränkung des Schwenkwinkels der Schleifscheibe liegt somit in vorteilhafter Weise nicht mehr vor. Es ist problemlos möglich, die Schleifscheibe genau auf der Schwenkachse zu halten bzw. zu platzieren, d. h. der Schleifscheibenmittelpunkt liegt genau auf der Schwenkachse.

Es kann auch eine direkte Messung des Schleifergebnisses erfolgen. Das 360°-Winkelmess-System sitzt direkt auf der Schwenkachse.

Die Schleifölzuführung kann optimal gestaltet werden, um den Schleifprozess zu unterstützen. Dies wird durch die konzentrische Einspeisung des Schleiföls bewerkstelligt, was eine effektive Versorgung mit Schleiföl um 360° ermöglicht.

Wenn die Schleifscheibe auf einen gewünschten Schrägungswinkel eingestellt ist, kann eine Klemmung der Schleifspindel auf den Winkel erfolgen, so dass ein präzises Schleifen erfolgen kann. Bevorzugt wird hierbei ein Hydrospannelement (Hydrodehnspannring) eingesetzt.

Mit dem vorgeschlagenen Schleifarm kann somit eine Funktionserweiterung bei hoher Flexibilität in Bezug auf das Schleifen von Verzahnungen und sonstigen Profilen in einer Schleifeinrichtung erfolgen.

Die Übertragung der Antriebsleistung für die Schleifscheibe erfolgt über das erste und zweite Getriebeelement (insbesondere durch den Kronradsatz oder den Kegelradsatz), was eine entsprechend hohe Leistungsübertragung erlaubt.

Für die Übertragung der Antriebsleistung der Schleifscheibe sowie die Übertragung der Drehbewegung für das Verschwenken der Schleifscheibe bzw. Schleifspindel auf den gewünschten Schrägungswinkel werden insbesondere jeweils separate einzelne Zahnriemen eingesetzt (bzw. ähnliche Elemente).

In vorteilhafter Weise kann der vorgeschlagene Schleifarm einfach an verschiedene Arten von Schleifmaschinen angepasst bzw. adaptiert werden.

Günstig ist eine hohe Steifigkeit der Konstruktion in allen Belastungsrichtungen, weiterhin ein gutes Dämpfungsvermögen.

In den Zeichnungen sind Ausführungsbeispiele der Erfindung dargestellt. Es zeigen:
- Fig. 1: in der Seitenansicht eine erste Ausführungsform des erfindungsgemäßen Schleifarms mit einem zu schleifenden Werkstück,
- Fig. 2: in der Vorderansicht eine zweite Ausführungsform des Schleifarms und
- Fig. 3: einen Schnitt durch den Schleifarm nach Figur 1 bzw. Figur 2 in Höhe des unteren axialen Endes des Schleifarms.

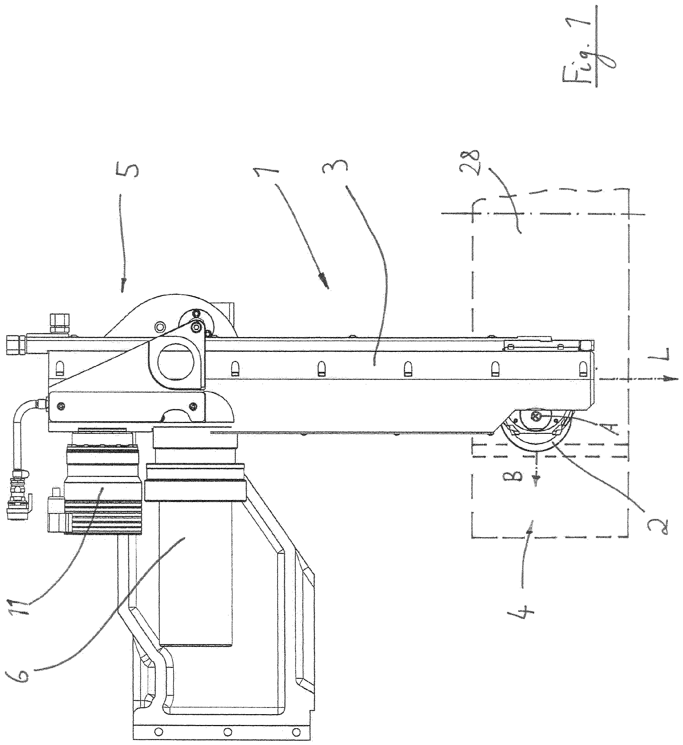

In Figur 1 ist ein Schleifarm 1 zu sehen, mit dem ein Werkstück 28 geschliffen wird, namentlich eine Innen-Schräg-Verzahnung desselben, die sich am Innenumfang des hohlzylindrisch ausgebildeten Werkstücks 28 befindet. Der Schleifarm 1 hat einen Grundkörper 3, der im wesentlichen rohrförmig ausgebildet ist. In seinem einen (unteren) axialen Endbereich 4 ist im Grundkörper 3 eine Schleifscheibe 2 angeordnet, im anderen (oberen) axialen Endbereich 5 des Grundkörpers 3 ist ein erster Antrieb 6 für den Antrieb der Schleifscheibe 2 angeordnet. In Figur 1 nicht zu erkennen ist, dass zum Antrieb der Schleifscheibe 2 im Inneren des Grundkörpers 3 ein Zahnriemen verläuft, der die Antriebsleistung vom ersten Antrieb 6 auf die Schleifescheibe 2 überträgt.

Die Schleifscheibe 2 muss auf einen Schrägungswinkel eingestellt werden, der erforderlich ist, um die Schrägverzahnung des Werkstücks 28 zu schleifen. Die Verschwenkung der Schleifscheibe 2 erfolgt um eine Achse B, die sowohl auf der Längsachse L des Grundkörpers 3 als auch auf der Drehachse A der Schleifscheibe 2 senkrecht steht (in Figur 1 steht die Drehachse A senkrecht auf der Zeichenebene).

Für das Einstellen der Schleifscheibe 2 auf den gewünschten bzw. benötigten Schwenkwinkel ist ein zweiter Antrieb 11 vorgesehen, der ebenfalls im einen (oberen) axialen Endbereich 5 des Grundkörpers 3 angeordnet ist.

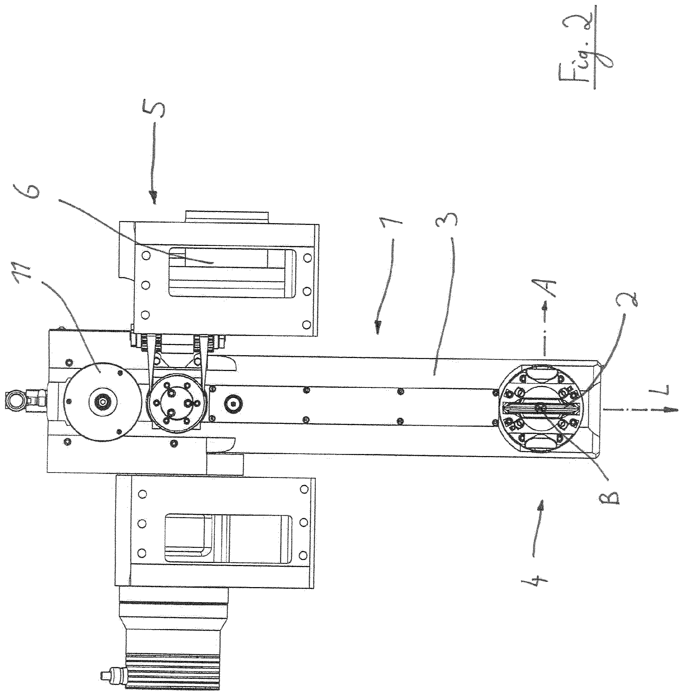

Vergleicht man die Figuren 1 und 2 (in Figur 2 ist der Schleifarm 1 um 90° um die Längsachse L gedreht dargestellt), ist zu erkennen, dass der Antrieb der Schleifscheibe 2 durch den ersten Antrieb 6 in unterschiedlicher Weise erfolgen kann, was den Aufbau im (oberen) Endbereich 5 des Grundkörpers 3 anbelangt. Es kann - wie Figur 1 zeigt - eine direkte Anordnung des Antriebs 6 am Schleifarm 1 erfolgen oder auch - wie Figur 2 zeigt - eine indirekte Anordnung, bei der die Antriebsleistung über nach außen verlagerte Antriebsmittel (Zahnriemen, Zwischenwellen) übertragen wird. Welche Lösung gewählt wird, hängt von den Gegebenheiten an der Schleifmaschine ab, in der der Schleifarm 1 eingesetzt wird.

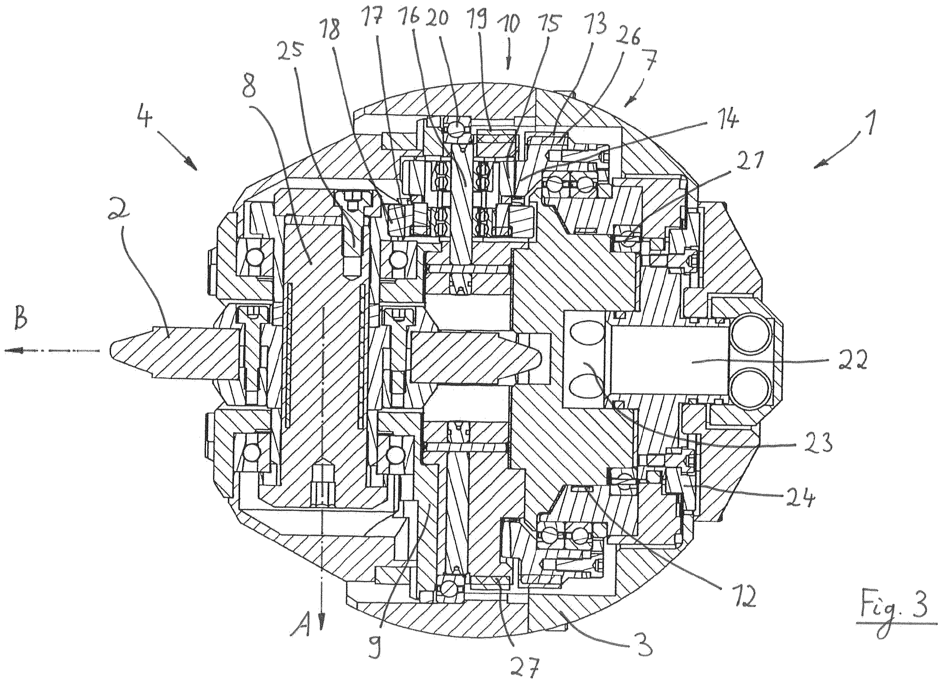

Der konkrete spezifische Aufbau des Schleifarms 1 ergibt sich aus der Schnittdarstellung gemäß Figur 3, wobei hier ein Schnitt senkrecht zur Längsachse L dargestellt ist, und zwar in Höhe der Schleifscheibe 2, wobei diese hier zwecks Übersichtlichkeit auf einen Schwenkwinkel von 0° eingestellt ist.

Im (oberen) axialen Endbereich 5 des Schleifarms 1 sind, wie bereits erwähnt, zwei (nicht dargestellte) Riemenscheiben gelagert, die von den Antrieben 6 und 11 angetrieben werden. Ein erster Zahnriemen 13 führt im Inneren des Schleifarms 1 nach unten in den Bereich des axialen Endbereichs 4 des Grundkörpers 3. In Figur 3 ist der erste Zahnriemen 13 markiert, der um eine erste Riemenscheibe 26 läuft, die ihrerseits mit einem ersten Getriebeelement 14 in Form eines Kegelrads drehfest verbunden ist (die Riemenscheibe 26 und das Getriebeelement 14 können einstückig miteinander ausgeführt sein). Das Kegelrad 14 ist im unteren axialen Endbereich 4 des Grundkörpers 3 drehbar gelagert und kämmt mit der Kegelradverzahnung mit einem zweiten Getriebeelement 15 in Form eines Ritzels. Das Ritzel 15 ist auf einer Zwischenwelle 16 gelagert, die in einem Trägerkörper 9 drehbar angeordnet ist (die Zwischenwelle 16 ist vorliegend als Stift bzw. Bolzen ausgebildet, auf dem Wälzlager angeordnet sind, mit dem dieser gelagert wird). Der Trägerkörper 9 ist im unteren axialen Endbereich 4 des Grundkörpers 3 um die Achse B drehbar gelagert. Hierfür dienen zwei Wälzlager 20 und 21.

Wesentlich ist, dass sich die Drehachse A und die Achse B schneiden. Damit ist vorteilhaft eine Drehung der Schleifscheibe 2 samt Trägerkörper 9 um die Achse B um 360° ermöglicht.

Auf der Zwischenwelle 16 befindet sich ein weiteres Verzahnungspaar 17 und 18 (Stirnradverzahnung), wobei die Verzahnung 18 mit der Schleifspindel 8 drehfest verbunden ist, die die Schleifscheibe 2 trägt.

Wird demgemäß über den ersten Antrieb 6 der erste Zahnriemen 13 angetrieben, dreht dieser das Kegelrad 14 und somit über das Ritzel 15 die Zwischenwelle 16. Die Zwischenwelle 16 treibt wiederum über das Verzahnungspaar 17 und 18 die Schleifspindel 8 und damit die Schleifscheibe 2 an.

Der erste Zahnriemen 13, das Kegelrad 14, das Ritzel 15, die Zwischenwelle 16 und das Verzahnungspaar 17, 18 bilden somit ein erstes Übertragungssystem 7, mit dem die Antriebsleistung des ersten Antriebs 6 auf die Schleifspindel 8 und somit auf die Schleifscheibe 2 übertragen wird.

Daneben existiert ein zweites Übertragungssystem 10, mit dem vom zweiten Antrieb 11 eine Drehbewegung auf den Trägerkörper 9 dergestalt übertragen werden kann, dass die Schleifscheibe 2 um die Achse B auf den gewünschten Schrägungswinkel eingestellt wird.

Das zweite Übertragungssystem 10 umfasst einen zweiten Zahnriemen 19, der um eine zweite Riemenscheibe 27 läuft, die ihrerseits um den Trägerkörper 9 umläuft. Wird demgemäß der zweite Antrieb 11 betätigt, wird über den zweiten Zahnriemen 19 die zweite Riemenscheibe 27 und somit der Trägerkörper 9 um die Achse B gedreht. Hierfür gibt es keinen Anschlag, so dass der volle Umfang (360°) abgedeckt ist, d. h. die Schleifscheibe 2 kann um die Achse B vollständig gedreht werden.

Ist ein gewünschter Schrägungswinkel eingestellt, können Klemmmittel 12 in Form von Hydrospannmitteln betätigt werden, um den Trägerkörper 9 relativ zum unteren Bereich des Schleifarms 1 zu klemmen.

Für das Spannen der Schleifscheibe 2 auf der Schleifspindel 8 ist ein Hydrodehnspannelement 25 vorgesehen.

Damit die Schleifscheibe 2 bei allen eingestellten Schrägungswinkeln stets hinreichend mit Schleiföl versorgt werden kann, ist eine Schleifölzuführung 22 vorgesehen, die zu einer Schleifölverteilung 23 führt; von hier aus wird die Schleifscheibe 2 mit Schleiflöl versorgt.

Zu erwähnen ist noch ein Mess-System 24, das zum Vermessen der geschliffenen Verzahnung bzw. des geschliffenen Profils dient.

In obiger Beschreibung wurde vom Schleifwerkzeug als von der Schleifscheibe 2 gesprochen. Generell ist es aber natürlich auch vorstellbar, dass der erfindungsgemäße Schleifarm im Zusammenhang mit einer Schleifschnecke zum Einsatz kommt.

### Bezugszeichenliste:

- 1: Schleifarm
- 2: Schleifscheibe
- 3: Grundkörper
- 4: axialer Endbereich des Grundkörpers
- 5: axialer Endbereich des Grundkörpers
- 6: erster Antrieb
- 7: erstes Übertragungssystem
- 8: Schleifspindel
- 9: Trägerkörper
- 10: zweites Übertragungssystem
- 11: zweiter Antrieb
- 12: Klemmmittel
- 13: erster Riemen (Zahnriemen) / erste Kette
- 14: erstes Getriebeelement (Kronrad / Kegelrad / Reibrad)
- 15: zweites Getriebeelement (Ritzel)
- 16: Zwischenwelle
- 17, 18: Verzahnungspaar
- 19: zweiter Riemen (Zahnriemen) / zweite Kette
- 20: Wälzlager
- 21: Wälzlager
- 22: Scheifölzuführung
- 23: Schleifölverteilung
- 24: Mess-System
- 25: Hydrodehnspannelement
- 26: erste Riemenscheibe
- 27: zweite Riemenscheibe
- 28: Werkstück

- L: Längsachse
- A: Drehachse
- B: Achse

## Patentansprüche

1. Schleifarm (1) zum Schleifen innenprofilierter Werkstücke mit einer Schleifscheibe (2),
wobei der Schleifarm (1) einen rohrförmigen Grundkörper (3) mit einer Längsachse (L) aufweist, in dessen einem axialen Endbereich (4) die Schleifscheibe (2) gelagert ist und in dessen anderem axialen Endbereich (5) ein erster Antrieb (6) für die Schleifscheibe (2) angeordnet ist, wobei die Drehbewegung vom ersten Antrieb (6) auf die Schleifscheibe (2) durch ein erstes Übertragungssystem (7) übertragen wird,
wobei die Schleifscheibe (2) auf einer vom ersten Übertragungssystem (7) angetriebenen und um eine Drehachse (A) drehbaren Schleifspindel (8) angeordnet ist,
wobei die Schleifspindel (8) in einem Trägerkörper (9) gelagert ist, der im Grundkörper (3) um eine Achse (B) drehbar angeordnet ist, die sowohl auf der Längsachse (L) als auch auf der Drehachse (A) senkrecht steht, wobei sich die Drehachse (A) und die Achse (B) schneiden,
**dadurch gekennzeichnet, dass**
der Trägerkörper (9) über ein zweites Übertragungssystem (10) von einem zweiten Antrieb (11) im Grundkörper (3) gedreht werden kann, wobei das zweite Übertragungssystem (10) einen zweiten Riemen (19), insbesondere einen zweiten Zahnriemen, oder eine zweite Kette umfasst, der oder die zwischen den beiden axialen Enden (4, 5) des Grundkörpers (3) verläuft.

2. Schleifarm nach Anspruch 1, **dadurch gekennzeichnet, dass** Klemmmittel (12) angeordnet sind, mit denen der Trägerkörper (9) im Grundkörper (3) in einer Relativlage geklemmt gehalten werden kann.

3. Schleifarm nach Anspruch 2, **dadurch gekennzeichnet, dass** die Klemmmittel (12) als Hydrodehnspannmittel ausgebildet sind.

4. Schleifarm nach einem der Ansprüche 1 bis 3, **dadurch gekennzeichnet, dass** das erste Übertragungssystem (7) einen ersten Riemen (13), insbesondere einen ersten Zahnriemen, oder eine erste Kette, umfasst, der oder die zwischen den beiden axialen Enden (4, 5) des Grundkörpers (3) verläuft.

5. Schleifarm nach Anspruch 4, **dadurch gekennzeichnet, dass** der erste Riemen (13) oder die erste Kette ein erstes Getriebeelement (14), insbesondere ein Kronrad, ein Kegelrad oder ein Reibrad, antreibt, das im einen axialen Endbereich (4) des Grundkörpers (3) drehbar gelagert ist, wobei das erste Getriebeelement (14) ein zweites Getriebeelement (15), insbesondere ein Ritzel, antreibt, das mit der Schleifspindel (8) direkt oder indirekt in Verbindung steht.

6. Schleifarm nach Anspruch 5, **dadurch gekennzeichnet, dass** das zweite Getriebeelement (15) auf einer Zwischenwelle (16) angeordnet ist, die über ein weiteres Verzahnungspaar (17, 18) die Schleifspindel (8) antreibt.

7. Schleifarm nach einem der Ansprüche 1 bis 6, **dadurch gekennzeichnet, dass** der zweite Riemen (19) oder die zweite Kette mit dem Trägerkörper (9) verbunden ist und diesen um die Achse (B) drehen kann.

8. Schleifarm nach Anspruch 7, **dadurch gekennzeichnet, dass** die Lagerung des Trägerkörpers (9) im einen axialen Endbereich (4) des Grundkörpers (3) mittels zweier Wälzlager (20, 21) erfolgt.

## Claims

1. Grinding arm (1) for grinding of workpieces with an inner profile with a grinding wheel (2),
wherein the grinding arm (1) comprises a tube-shaped base body (3) with a longitudinal axis (L), in which the grinding wheel (2) is supported at one of the axial end regions (4) and a first drive (6) for the grinding wheel (2) is arranged in its other axial end region (5), wherein the transmission of the rotation from the first drive (6) to the grinding wheel (2) takes place by means of a first transmission system (7),
wherein the grinding wheel (2) is arranged on a grinding spindle (8) which is driven by the first transmission system (7) and is rotating around an axis of rotation (A),
wherein the grinding spindle (8) is supported in a carrier body (9) which is arranged in the base body (3) rotatable around an axis (B) which axis (B) is perpendicular to the longitudinal axis (L) as well as perpendicular to the axis of rotation (A), wherein the axis of rotation (A) and the axis (B) intersect,
**characterized in that**
the carrier body (9) can be rotated in the base body (3) via a second transmission system (10) by a second drive (11), wherein the second transmission system (10) comprises a second belt (19), especially a second toothed belt, or a second chain which runs between the two axial end regions (4, 5) of the base body (3).

2. Grinding arm according to claim 1, **characterized in that** clamping means (12) are arranged by which the carrier body (9) can be clamped in the base body (3) in a relative position.

3. Grinding arm according to claim 2, **characterized in that** the clamping means (12) are designed as hydraulic expanding mandrel.

4. Grinding arm according to one of claims 1 to 3, **characterized in that** the first transmission system (7) comprises a first belt (13), especially a first toothed belt, or a first chain which runs between the two axial end regions (4, 5) of the base body (3).

5. Grinding arm according to claim 4, **characterized in that** the first belt (13) or the first chain drives a first gear element (14), especially a crown wheel, a bevel wheel or a friction wheel, which is rotatably supported in one axial end region (4) of the base body (3), wherein the first gear element (14) drives a second gear element (15), especially a pinion, which is connected directly or indirectly with the grinding spindle (8).

6. Grinding arm according to claim 5, **characterized in that** the second gear element (15) is arranged on an intermediate shaft (16) which drives the grinding spindle (8) via a further pair of gearing (17, 18).

7. Grinding arm according to one of claims 1 to 6, **characterized in that** the second belt (19) or the second chain is connected with the carrier body (9) and can rotate the same around the axis (B).

8. Grinding arm according to claim 7, **characterized in that** the bearing of the carrier body (9) occurs by means of two roller bearings (20, 21) in one axial end region (4) of the base body (3).

## Revendications

1. Bras de meulage (1) permettant de meuler des pièces ayant un profilé intérieur au moyen d'un disque de meulage (2),
le bras de meulage (1) comportant un corps principal (3) tubulaire présentant un axe longitudinal (L), dans une des régions d'extrémité axiales (4) duquel, le disque de meulage (2) est logé et dans l'autre région d'extrémité axiale (5) duquel, un premier entraînement (6) du disque de meulage (2) est disposé, le mouvement de rotation du premier entraînement (6) étant transmis au disque de meulage (2) par un premier système de transmission (7),
le disque de meulage (2) étant disposé sur une broche de meulage (8) mobile en rotation autour d'un axe de rotation (A) et entraînée par le premier système de transmission (7),
la broche de meulage (8) étant logée dans un corps de support (9), monté mobile en rotation dans le corps principal (3) autour d'un axe (B) qui est perpendiculaire à la fois à l'axe longitudinal (L) et à l'axe de rotation (A), l'axe de rotation (A) et l'axe (B) présentant un point d'intersection,
**caractérisé en ce que**
le corps de support (9) peut être mis en rotation à l'intérieur du corps principal (3) par un deuxième entraînement (11) par l'intermédiaire d'un deuxième système de transmission (10), le deuxième système de transmission (10) comprenant une deuxième courroie (19), en particulier une deuxième courroie crantée, ou une deuxième chaîne, laquelle s'étend entre les deux extrémités axiales (4, 5) du corps principal (3).

2. Bras de meulage selon la revendication 1, **caractérisé en ce que** des moyens de serrage (12) avec lequels le corps de support (9) peut être maintenu de manière fixe dans une position relative à l'intérieur du corps principal (3) sont présents.

3. Bras de meulage selon la revendication 2, **caractérisé en ce que** les moyens de serrage (12) sont réalisés sous forme de moyens de serrage hydrauliques expansibles.

4. Bras de meulage selon l'une quelconque des revendications 1 à 3, **caractérisé en ce que** le premier système de transmission (7) comprend une première courroie (13), en particulier une première courroie crantée, ou une première chaîne, qui s'étend entre les deux extrémités axiales (4, 5) du corps principal (3).

5. Bras de meulage selon la revendication 4, **caractérisé en ce que** la première courroie (13) ou la première chaîne entraîne un premier élément d'engrenage (14), en particulier une couronne dentée, une roue conique ou un galet de friction, qui est monté mobile en rotation dans ladite une région d'extrémité axiale (4) du corps principal (3), le premier élément d'engrenage (14) entraînant un deuxième élément d'engrenage (15), en particulier un pignon, qui est en liaison directe ou indirecte avec la broche de meulage (8) .

6. Bras de meulage selon la revendication 5, **caractérisé en ce que** le deuxième élément d'engrenage (15) est disposé sur un arbre intermédiaire (16) qui entraîne la broche de meulage (8) par l'intermédiaire d'une autre paire d'engrenages (17, 18).

7. Bras de meulage selon l'une quelconque des revendications 1 à 6, **caractérisé en ce que** la deuxième courroie (19) ou la deuxième chaîne est reliée au corps de support (9) et peut l'entraîner en rotation autour de l'axe (B).

8. Bras de meulage selon la revendication 7, **caractérisé en ce que** le corps de support (9) est logé dans ladite une région d'extrémité axiale (4) du corps principal (3) au moyen de deux paliers à roulement (20, 21).
